# EUROPÄISCHE PATENTSCHRIFT

(11) **EP 0 324 354 B1**
(45) Veröffentlichungstag und Bekanntmachung des Hinweises auf die Patenterteilung: **01.12.1993**
(21) Anmeldenummer: 89100061.4
(22) Anmeldetag: 04.01.1989
(51) Int. Cl.: C08F 283/00, D21H 13/20, C14C 9/00, D06M 15/277

(54) **Pfropfcopolymerisate, ein Verfahren zu deren Herstellung und deren Verwendung**
Graft polymers, preparation process and use
Polymères greffés, leur procédé de préparation et leur utilisation

(30) Priorität: 14.01.1988 DE 3800845
(43) Veröffentlichungstag der Anmeldung: 19.07.1989
(73) Patentinhaber: BAYER AG, 51368 Leverkusen (DE)
(72) Erfinder: Süling, Carlhans, Dr., D-5068 Odenthal (DE); Reich, Friedrich, Dr., D-5090 Leverkusen 1 (DE); Kortmann, Wilfried, Dipl.-Ing., D-5800 Hagen 5 (DE); Schultz, Klaus-Dieter, Dr., D-4019 Monheim (DE); Fischer, Manfred, D-5090 Leverkusen 3 (DE)

(56) Entgegenhaltungen:
- US-A- 4 652 605
- DATABASE WPIL, No. 85-267696 [43], Derwent Publications Ltd, Londen, GB; & JP-A-60 181 365 (UNITIKA K.K.) 17-09-1985
- DATABASE WPIL, Nr. 85-041536 [07], Derwent Publications Ltd, Londen, GB; & JP-A-60 000 956 (IZUMI K.K.) 07-01-1985

## Beschreibung

Die vorliegende Erfindung betrifft Pfropfcopolymerisate auf Basis von mindestens einem Perfluoralkylgruppen enthaltenden, ethylenisch ungesättigten Monomer im Gemisch mit einem Acryl-, Methacryl-, Vinyl-, Malein-und/oder Styrolderivat und einem Melaminpolykondensat als Pfropfsubstrat, die zur Oleophobausrüstung von Textilien, Teppichen, Papier oder Leder geeignet sind und die gleichzeitig wirksame Hydrophobiermittel sind, sowie ein Verfahren zu deren Herstellung.

Pfropfcopolymerisate auf Basis von Perfluoralkylmonomeren und ethylenisch ungesättigten Monomeren unter Verwendung unterschiedlicher Pfropfgrundlagen sind bekannt.

Dispersionen oder Lösungen z.B. auf Basis von Polyvinylverbindungen oder auf Basis von Polyurethanen werden als Pfropfgrundlage verwendet. Derartige Dispersionen enthalten üblicherweise als disperse Phase makromolekulare Verbindungen mit sehr hohen Molekulargewichten (MG >50 000), da die Pfropfausbeuten wie allgemein bekannt gut sind, wenn hochmolekulare Pfropfgrundlagen verwendet werden.

Nachteilig für derartige hochmolekulare Pfropfsubstrate bei der Herstellung von Pfropfcopolymerisation, die zur Oleophobausrüstung von Textilien oder Teppichen verwendet werden, ist allerdings, daß derartige hochmolekulare Pfropfunterlagen und die resultierenden Pfropfcopolymerisate unverträglich sind und damit eine qualitativ hochwertige Ausrüstung schwierig wird.

In der US-Patentschrift 3 510 455 wird die Verwendung von ungepfropften Perfluoralkylgruppen enthaltenden Polykondensaten für die Oleophobausrüstung von Textilien beschrieben. Es handelt sich um Prepolymere auf Basis von Aldehyden, Aminogruppen enthaltenden Verbindungen und Perflouralkylgruppen enthaltenden Verbindungen, die ein reaktives H-Atom enthalten. Eine Textilausrüstung unter Verwendung dieser Prepolymeren liefert jedoch Textilien "mit einem harten Griff" und genügt damit nicht den modernen Anforderungen an Oleophobausrüstungen.

Aufgabe war es daher, Pfropfcopolymerisate zur Verfügung zu stellen, die bei einem möglichst geringen Anteil an Perfluoralkylgruppen pro auszurüstender Fläche eine gute Oleophobie und Hydrophobie zeigen, ohne daß wichtige Wareneigenschaften wie z.B. "der Griff" oder die Lichtbeständigkeit negativ beeinflußt werden, da bei der Hydrophobausrüstung Polymere in entsprechenden Konzentrationen, die einen hohen Anteil an Perfluoralkylgruppen haben, den Griff der resultierenden Artikel beeinträchtigen und die Scheuerbeständigkeit mindern.

Überraschenderweise wurde gefunden, daß unter Verwendung der erfindungsgemäßen Polykondensate als Pfropfgrundlagen Pfropfcopolymerisate mit sehr guten Hydrophob-Oleophobeigenschaften erhalten werden können, obgleich diese Pfropfgrundlagen relativ niedere Molgewichte aufweisen.

Gegenstand der Erfindung sind Pfropfcopolymerisate auf der Basis von mindestens einem Perfluoralkylgruppen enthaltenden, ethylenisch ungesättigten Monomer im Gemisch mit Acryl-, Methacryl-, Vinyl-, Malein-und/oder Styrolderivaten, die dadurch gekennzeichnet sind, daß als Pfropfsubstrat Melaminpolykondensate verwendet werden.

Bevorzugte Perfluoralkylgruppen enthaltende, ethylenisch ungesättigte Monomere entsprechen der allgemeinen Formel I und/oder II 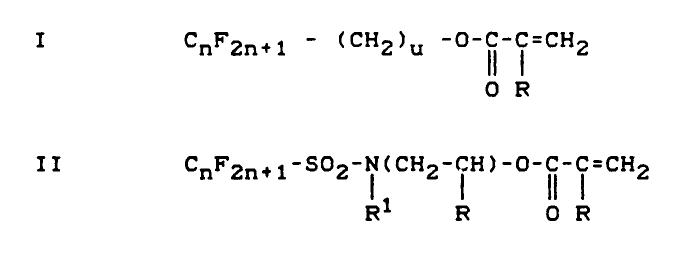
wobei n für eine ganze Zahl zwischen 4 und 20,
u für 1 oder 2, R für H oder CH₃ und R¹ für einen Alkylrest mit 1 bis 7 C-Atomen steht, der geradkettig, verzweigt oder cyclisch und eventuell mit Alkoxygruppen substituiert sein kann.

Ein weiterer Gegenstand der Erfindung ist ein Verfahren zur Herstellung der Pfropfcopolymerisate auf der Basis von mindestens einem Perfluoralkylgruppen enthaltenden, ethylenisch ungesättigten Monomer im Gemisch mit Acryl-, Methacryl-, Vinyl-, Malein- und/oder Styrolderivaten, welches dadurch gekennzeichnet ist, daß als Pfropfsubstrat Melaminpolykondensate eingesetzt werden.

In einer bevorzugten Ausführungsform werden im Verfahren zur Herstellung der Pfropfcopolymerisate Hilfslösungsmittel eingesetzt.

Verwendung finden die Pfropfcopolymerisate bei der Oleophob/Hydrophobausrüstung von Textilen, Teppichen, Papier und Leder.

Die als Comonomere bei der Pfropfung verwendeten ethylenisch ungesättigten Monomere sind beispielsweise Acrylsäure, Acrylamide, Acrylsäureester. Bevorzugt werden aus der Reihe der Acrylderivate Acrylsäureester verwendet, wie z. B. Acrylsäureethylester, Acrylsäurestearylester und Acrylsäurebehenylester.

Weiterhin eignen sich Methacrylsäure, Methacrylsäureamide und Methacrylsäureester als Comonomere. Bevorzugt werden aus der Reihe der Methacrylsäurederivate die Methacrylsäureester wie Methacrylsäureethylester, Methacrylsäurebutylester, Methacrylsäurecyclohexylester oder Methacrylsäurestearylester verwendet.

Auch Styrol, 2-Methylstyrol, Vinylchlorid oder Vinylacetat eignen sich als Comonomere ebenso wie Maleinsäure, Maleinimide oder Maleinsäureester und Maleinsäurehalbester.

Im allgemeinen werden wasserunlösliche Comonomere bevorzugt, wenn auch z. B. zur Gewährleistung einer gewissen Haftung auf den verschiedenen Substraten bei der Oleophob/Hydrophobausrüstung in Anteilen bis zu 10 % vorzugsweise 2 % wasserlösliche Comonomere verwendet werden können.

Zur Verbesserung der Pfropfausbeute kann es nützlich sein, Allylverbindungen wie Triallylcyanurat, Diallylether oder Allylbutylether in geringen Mengen als Comonomere zu verwenden. Ein sehr guter Effekt wird erzielt, wenn als Monomergemisch z. B. ein Gemisch aus 30 bis 60 Gew.-% Perfluoralkylacrylat und/oder Perfluoralkylmethacrylat und 40 bis 70 Gew.-% an perfluoralkylgruppenfreien Monomeren verwendet wird; dabei ist es vorteilhaft, als perfluoralkylgruppenfreie Monomere ein Gemisch zu verwenden, das seinerseits wieder eine Mischung aus Acryl- und/oder Methacrylsäureestern ist. Besonders gute Ergebnisse werden erhalten, wenn neben Monomeren wie Butylacrylat oder Ethylmethacrylat als mengenmäßig wichtige Komponenten die Methacrylsäure- oder Acrylsäureester von langkettigen Alkoholen wie Stearylalkohol oder Behenylalkohol verwendet werden.

Die Polymerisation wird durch Radikalbildner ausgelöst; als Radikalbildner sind z. B. aliphatische Azoverbindungen wie Azodiisobutyronitril und anorganische oder organische Peroxide geeignet. Als Peroxide seien genannt Diacylperoxid wie z. B. Dibenzoylperoxid und Hydroperoxide wie z. B. tert. Butylhydroperoxid. Auch tert. Butylperpivalat und Percarbonate wie Dicyclohexylpercarbonat sind geeignet. Als anorganische Peroxide eignen sich besonders die Alkalisalze der Peroxidisulfonsäure. Selbstverständlich ist es möglich durch Verwendung von Redoxsystemen die Pfropfcopolymerisation bei Temperaturen von 40°C und darunter durchzuführen. Geeignete Startersysteme sind z. B. Mischungen aus Peroxidisulfonaten und reduzierenden Schwefelverbindungen wie Bisulfiten oder Thiosulfaten oder Kombinationen von Diacylperoxiden mit tert. Aminen. Zur Einstellung der Molekulargewichte bzw. der Molekulargewichtsverteilungen können die bekannten Kettenüberträger auf Basis von Merkaptoverbindungen oder aliphatischen Aldehyden verwendet werden.

Die verwendeten Perfluoralkylmonomeren sind feste, meistens kristalline Verbindungen. Für die Pfropfpolymerisation bzw. Pfropfcopolymerisation ist es daher oft erforderlich, Hilfslösungsmittel zu verwenden, wenn nicht mit einem großen mengenmäßigen Überschuß an Comonomeren gearbeitet wird. Als Hilfslösungsmittel eignen sich Lösungsmittel, die weitgehend inert gegen Peroxide sind. Beispielsweise seien genannt Methanol, tert. Butanol, Aceton, Methylethylketon, Toluol, Essigsäureethylester, Methyl-tert. butylether oder Mischungen aus solchen Lösungsmitteln.

Die Pfropfcopolymerisation kann in der Masse, in Lösung oder nach der Verfahrensweise einer Polymerisation in Emulsion durchgeführt werden. Eine bevorzugte Ausführungsform ist die radikalische Pfropfung in wäßriger Emulsion. Zur Stabilisierung der erfindungsgemäßen Dispersionen und auch zur Herstellung der Monomeremulsionen, die beim erfindungsgemäßen Verfahren eingesetzt werden, können übliche anionenaktive, kationenaktive oder nichtionogene Emulgatoren eingesetzt werden. Beispiele für anionenaktive Emulgatoren sind Alkylsulfonate, Alkylarylsulfonate, Fettalkoholsulfate oder Sulfobernsteinsäureester, ferner Perfluoralkylgruppen enthaltende Emulgatoren wie Ammonium- oder Tetraethylammoniumsalze der Perfluoroctansulfonsäure oder das Kaliumsalz des N-Ethyl-N-perfluoroctansulfonylglycins. Beispiele für kationenaktive Emulgatoren sind quartäre Ammonium- oder Pyridiniumsalze, z. B. Stearyldimethylbenzylammoniumchlorid oder N,N,N-Trimethyl-N-perfluoroctansulfonamidopropyl-ammoniumchlorid. Beispiel für nichtionogene Emulgatoren sind Polyglykolether, z. B. Ethylenoxid/Propylenoxid-Block-oder -Copolymere, Alkoxylierungsprodukte, insbesondere Ethoxylierungsprodukte von Fettalkoholen, Alkylphenolen, Fettsäuren, Fettsäureamiden, Sorbitanmonooleat oder von N-Alkyl-N-perfluoroctansulfonylglycinen. Besonders geeignet sind Kombinationen von nichtionogenen Emulgatoren mit anionenaktiven oder kationenaktiven Emulgatoren.

Das erfindungsgemäße Verfahren wird im allgemeinen bei Temperaturen zwischen 20 und 120°C, vorzugsweise zwischen 50 und 100°C durchgeführt.

Die resultierenden Dispersionen haben nach der Aufarbeitung, d. h. nach Abtrennung von Hilfslösungsmitteln und Restmonomeren einen Feststoffgehalt zwischen 10 und 30 Gew.-%.

Die erfindungsgemäßen Pfropfgrundlagen sind Melaminkondensationsprodukte. Derartige Kondensationsprodukte können erhalten werden, indem man z. B. Methylolprodukte von Aminotriazinen oder deren Veretherungs- und Veresterungsprodukte mit z. B. aliphatischen Carbonsäuren und mit sekundären oder primären Aminen einer Polykondensation unterwirft. Das Verfahren kann beispielsweise in der Art und Weise durchgeführt werden, daß man zunächst die Carbonsäure mit dem Melaminderivat umsetzt, um dann anschließend die Aminokomponente zur Reaktion zu bringen.

Eine detaillierte Beschreibung derartiger Kondensationsprodukte ist in der deutschen Patentschrift 959 990 gegeben.

Eine chemische Variation der Pfropfgrundlage ist in sehr weiten Grenzen möglich. Besonders gute Ergebnisse werden erzielt, wenn als zusätzliche Hilfsstoffe bei der Pfropfung Paraffine verwendet werden. Derartige Hilfslösungsmittel bewirken, daß die resultierenden feinteiligen Dispersionen scherstabil bleiben.

### Beispiel

### Herstellung der Pfropfgrundlage: Polykondensat A

1,5 Mol Behensäure werden aufgeschmolzen und innerhalb 30 Minuten gleichzeitig mit 1 Mol Melaminhexamethylolpentamethylether und 0,9 Mol N-Methyl-diethanolamin versetzt. Während dessen wird die Schmelze auf 130°C erhitzt und 3 Stunden bei dieser Temperatur gehalten. Anschließend wird in die Schmelze die gleiche Gewichtsmenge eines Paraffins vom Schmelzpunkt 52°C eingetragen.

### Herstellung des Pfropfcopolymerisates

In einem Reaktionsgefäß werden in 4800 Gewichtsteilen entsalztem Wasser 28,8 Gewichtsteile eines ethoxylierten Nonylphenols mit durchschnittlich 10 Ethoxyeinheiten und einem Klarpunkt bei 55°C und 4,7 Gewichtsteile Benzyldodecyl-dimethylammoniumchlorid gelöst. Eine wäßrige Lösung von 382 Gewichtsteilen N-Ethoxy-methacryloyl-N-methyl-perfluoroctylsulfonamid, 187 Gewichtsteilen Stearoylmethacrylat, 151 Gewichtsteilen Vinylacetat und 10,8 Gewichtsteilen Dilauroylperoxid werden mit 2160 Gewichtsteilen Essigsäureethylester gemischt. Zusätzlich werden 72 Gewichtsteile Polykondensat A dazu gegeben.

Anschließend wird in einer Emulgiermaschine bei 50°C emulgiert. Die Teilchengröße der resultierden wäßrigen Emulsion liegt bei 480 nm. In die gerührte Emulsion wird eine Lösung von 7,2 Gewichtsteilen tert-Butylperpivalat in 10 Gewichtsteilen Essigsäureethylester gegeben. Die Emulsion wird zum rückfließenden Sieden gebracht und 2 Stunden bei Siedetemperatur gehalten. Anschließend wird der Essigsäureethylester abdestilliert. Dabei stellt sich im Reaktionsgefäß eine Temperatur von 80°C ein. Danach werden restliche Monomere und noch vorhandene Lösungsmittel im Vakuum entfernt.

Man erhält eine wäßrige Polymerisatdispersion mit einem Feststoffgehalt von 12,8 Gew.-%. Die Teilchengröße liegt bei 520 nm. Der Fluorgehalt des Feststoffes liegt bei 23,9 Gew.-%.

Bei der anwendungstechnischen Prüfung ergibt ein mit diesem Pfropfprodukt ausgerüstetes Gewebe auf Basis von Acrylfasern (300 g/m²) einen Ölwert von 5 nach AATCC 0118. Es befinden sich 0,1 g Fluor auf 240 g Gewebe.

## Patentansprüche

1. Pfropfcopolymerisate auf der Basis von mindestens einem Perfluoralkylgruppen enthaltenden, ethylenisch ungesättigten Monomer im Gemisch mit Acryl-, Methacryl-, Vinyl-, Malein- und/oder Styrolderivaten, dadurch gekennzeichnet, daß als Pfropfsubstrat Melaminpolykondensate verwendet werden.

2. Pfropfcopolymerisate nach Anspruch 1, dadurch gekennzeichnet, daß die Perfluoralkylgruppen enthaltenden, ethylenisch ungesättigten Monomeren der allgemeinen Formel I und/oder II entsprechen 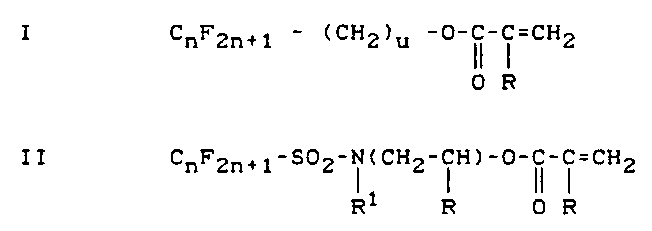 wobei n für eine ganze Zahl zwischen 4 und 20, u für 1 oder 2, R für H oder CH₃ und R¹ für einen Alkylrest mit 1 bis 7 C-Atomen steht, der geradkettig, verzweigt oder cyclisch und gegebenenfalls mit Alkoxyresten substituiert sein kann.

3. Verfahren zur Herstellung von Pfropfcopolymerisaten auf der Basis von mindestens einem Perfluoralkylgruppen enthaltenden, ethylenisch ungesättigten Monomer im Gemisch mit Acryl-, Methacryl-, Vinyl-, Malein- und/oder Styrolderivaten, dadurch gekennzeichnet, daß als Pfropfsubstrat Melaminpolykondensate eingesetzt werden.

4. Verfahren zur Herstellung von Pfropfcopolymerisation gemäß Anspruch 3, dadurch gekennzeichnet, daß bei der Pfropfcopolymerisation Hilfslösungsmittel eingesetzt werden.

5. Verwendung der Pfropfcopolymerisate gemäß einem der Ansprüche 1 oder 2 zur Oleophob/Hydrophobausrüstung von Textilien, Teppichen, Papier und Leder.

## Claims

1. Graft copolymers based on at least one perfluoroalkyl group-containing, ethylenically unsaturated monomer mixed with acrylic, methacrylic, vinyl, maleic and/or styrene derivatives, characterized in that, as graft substrate, melamine polycondensates are used.

2. Graft copolymers according to Claim 1, characterized in that the perfluoroalkyl group-containing, ethylenically unsaturated monomers conform to the general formulae I and/or II 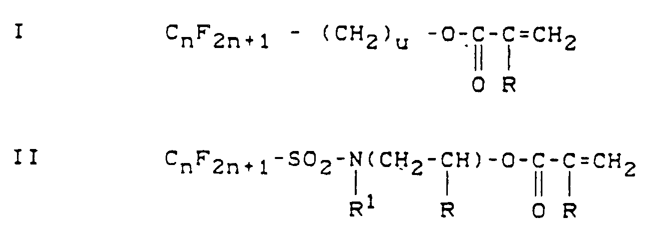 where n represents an integer between 4 and 20, u represents 1 or 2, R represents H or CH₃, and R¹ represents an alkyl radical having 1 to 7 carbon atoms which may be straight-chain, branched or cyclic and may optionally be substituted by alkoxy radicals.

3. Process for the preparation of graft copolymers based on at least one perfluoroalkyl group-containing, ethylenically unsaturated monomer mixed with acrylic, methacrylic, vinyl, maleic and/or styrene derivatives, as graft substrate, melamine polycondensates are employed.

4. Process for the preparation of graft copolymers according to Claim 3, characterized in that auxiliary solvents are employed in the graft copolymerization.

5. Use of the graft copolymers according to one of Claims 1 or 2 for the oilproofing/waterproofing of textiles, carpets, paper and leather.

## Revendications

1. Copolymères greffés à base d'au moins un monomère à non-saturation éthylénique contenant des groupes perfluoralkyle, en mélange avec des dérivés acryliques, méthacryliques, vinyliques, maléiques et/ou des dérivés de styrène, caractérisés en ce qu'on utilise comme substrat de greffage des produits de polycondensation de mélamine.

2. Copolymères greffés suivant la revendication 1, caractérisés en ce que les monomères à non-saturation éthylénique contenant des groupes perfluoralkyle répondent aux formules générales I et/ou II 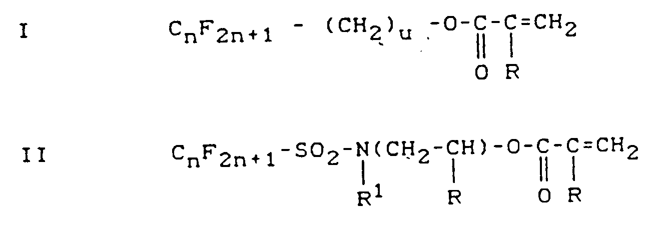 dans lesquelles n représente un nombre entier de 4 à 20, u a la valeur 1 ou 2, R représente H ou CH₃ et R¹ est un reste alkyle ayant 1 à 7 atomes de carbone, qui peut être linéaire, ramifié ou cyclique et, le cas échéant, substitué avec des restes alkoxy.

3. Procédé de production de copolymères greffés à base d'au moins un monomère à non-saturation éthylénique portant des groupes perfluoralkyle, en mélange avec des dérivés acryliques, méthacryliques, vinyliques, maléiques et/ou des dérivés de styrène, caractérisé en ce qu'on utilise comme substrat de greffage des produits de polycondensation de mélamine.

4. Procédé de production de copolymères greffés suivant la revendication 3, caractérisé en ce qu'on utilise des solvants auxiliaires dans la copolymérisation par greffage.

5. Utilisation des copolymères de greffage suivant l'une des revendications 1 et 2, pour l'apprêtage oléophobe/hydrophobe de matières textiles, de tapis, de papier et de cuir.
